# EUROPEAN PATENT APPLICATION

(11) **EP 2 523 417 A1**
(43) Date of publication of application: **14.11.2012**
(21) Application number: 11165257.4
(22) Date of filing: 09.05.2011
(51) Int. Cl.: H04L 29/06

(54) **Paring of devices using an encryption key**

(71) Applicant: KAMSTRUP A/S, 8660 Skanderborg (DK)
(72) Inventor: Nielsen, Søren Tønnes, 8355 Solbjerg (DK); Sørensen, Jens Lykke, 8330 Beder (DK); Laursen, Peter Schmidt, 8660 Skanderborg (DK)
(74) Representative: Plougmann & Vingtoft A/S

(57) **Abstract**

The invention discloses a way of pairing a data transmitter and a data receiver by utilizing an encryption key as an identifier of the data transmitter at the data receiver. At least one of the devices is a consumption meter for measuring consumption data of a supplied utility, the devices are arranged in a radio network. The pairing process comprises the steps of initiating the pairing, transmitting the encryption key via a secured connection, storing the encryption key at the data receiver, and using the encryption key as an identifier of the data transmitter at the data receiver, thereby pairing the data transmitter and the data receiver. Also a method of communication between paired devices is disclosed, as well as a system of devices arranged in a radio network.

## Description

### FIELD OF THE INVENTION

The present invention relates to pairing of devices arranged in a radio network, and to subsequent communication of paired devices. In particular the invention relates to pairing of devices arranged for wireless communication of consumption data of a supplied utility.

### BACKGROUND OF THE INVENTION

A consumption meter measures the consumption of a supplied utility, such as supplied hot water for district heating. In many homes a number of different utilities are provided and the residents pay for the consumed amount. Together with the bills, the utility provider normally provides tables or graphs showing the residents consumption since the last bill. However, such bills are typically only sent out each month, each third month or even each half year, rendering it difficult for the consumers to closely follow their utility consumption.

To closely follow the consumed amount of utilities of a household or other relevant unit, it is possible to use a so-called in-home display. When using an in-home display, it is important that the consumption data of a household is kept secret to everybody else than the residents of the household (or other authorized persons). It is not acceptable that the residents of one household can monitor the consumption of any other households, or that unauthorized persons can access a household's consumption data. To make sure that in-home display only displays allowed consumption data, the display needs to be properly paired with the relevant consumption meter or meters.

In other situations, a consumption meter may be installed at a location which is not easily accessible. In such situations, a user may wish to install an associated display at a more convenient location. Again it is relevant that the associated display displays consumption data of the consumption meter with which it is associated. To ensure this, the associated display and the consumption meter needs to be paired.

In yet other situations, a consumption meter may be installed at a remote location, for example at a summer cottage. Many consumption meters are equipped with various alarms indicating an irregular consumption pattern. In such situations, it may be advantageous to shut off the supply of the utility upon detection of the irregularity by use of a valve or switch, and then at a later time inspect the cause of the alarm. In such situations it is important that the associated valve or switch and the consumption meter are properly paired to make sure that the valve or switch only reacts to transmissions from the correct data transmitter.

### SUMMARY OF THE INVENTION

It would be advantageous to provide a simple and secure manner of pairing devices and ensuring subsequent secure communication of consumption data.

This is achieved in a first aspect by a method of pairing a data transmitter and a data receiver arranged in a radio network where at least one device is a consumption meter for measuring consumption data of a supplied utility and wherein the radio network is arranged for transmitting the consumption data, the data transmitter stores an encryption key for encrypting the data transmitted to the data receiver in the radio network, the method comprises:
- initiate pairing of the data transmitter and the data receiver;
- transmit via a secured connection the encryption key from the data transmitter to the data receiver;
- store the encryption key at the data receiver;
- use the encryption key as an identifier of the data transmitter at the data receiver, thereby pairing the data transmitter and the data receiver.

An important advantage of the current invention is that the data receiver does not need to know anything about the identity of the data transmitter prior to the pairing. Thus, each meter can be given an encryption key at the factory without any need to correlate the identity of the transmitter with the identity of the receiver which greatly reduces the administrative burden of the manufacturer. Moreover, the installer of the receiver need not bother with a complicated pairing process, and in particular need not bother with the cumbersome task of making sure that the correct encryption key is known at the correct receiver, since this is handled automatically. This also greatly facilitates exchange of equipment, since all that is needed is to pair the devices again. No prior knowledge of the other devices in the network is needed.

Subsequent secure communication between devices is ensured in a second aspect by a method of communicating in a radio network between a data transmitter and a data receiver being paired in accordance with the first aspect, where the data transmitter transmits encrypted data to the data receiver, the data receiver storing encryption keys from devices with which it is paired, the method comprises:
a) at the data transmitter, emit encrypted data;
b) at the data receiver upon receipt of the encrypted data,
   o decrypt the received data with a stored encryption key;
   o validate the decrypted data;
c) if the decrypted data can be validated, store the received data for further processing, otherwise disregard the received data.

An important advantage of the current invention is that without knowing anything about the identity of the data transmitter, secure communication is ensured between paired devices in an automatic manner. Moreover, the implementation of the method can be done in fairly simple manner which does not require great computing power, and therefore embodiments of the present invention may be implemented in a manner which ensure low power consumption and which does not require high cost components.

The invention is advantageously applied to a system where the data transmitter is a consumption meter for measuring consumption data of a supplied utility arranged in a radio network with a data receiver in the form of a display device for displaying the consumption data. The display may advantageously be a so-called in-home display, a repeater display or auxiliary display associated with a display mounted on the consumption meter, or a detachable display of a consumption meter which can be freely mounted at any location with radio coverage. The data receiver may also be other types of auxiliary equipments such as valves or switches.

The consumption meter may in embodiments be a charging consumption meter for charging an amount of a supplied utility. The consumption meter may be an energy meter for metering an amount of energy consumed, a heat meter for district heating, a cooling meter for district cooling, a water meter for distributed water, e.g. drinking water, a gas meter and/or an electricity meter. The consumption meter may be a legal meter, i.e. a meter which is subdued to regulatory demands. Such regulatory demands may be demands to the precision of the measurements.

Due to the simplicity, embodiments of the invention may advantageously be used in connection with small-scale networks where the data receiver is paired to a limited number of data transmitters, such as to a single data transmitter or to a few data transmitters, such as up to 10 data transmitters. More data transmitters may be envisioned, the upper limit of paired data transmitters may be determined based on a compromise between the cost of a more advanced large-scale system and the acceptable time consumption as well as power consumption of the serial identification process.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 schematically illustrates an embodiment where a number of consumptions meters are arranged in houses;
Fig. 2 shows an exemplary embodiment of a consumption device and a display in the context of pairing the two devices;
Fig. 3 illustrates a general example flow diagram of communication between a consumption meter and a display in the context of Fig. 1 and 2;
Fig. 4 illustrates a flow diagram similar to Fig. 3, however for an embodiment where a communication format is utilized where the data packet comprises a non-encrypted identifier of the transmitting device;
Fig. 5 illustrates a schematic drawing of a flow meter is attached to a flow system at an inaccessible location; and
Fig. 6 illustrates a schematic drawing of a situation where the data receiver is a valve.

### DESCRIPTION OF EMBODIMENTS

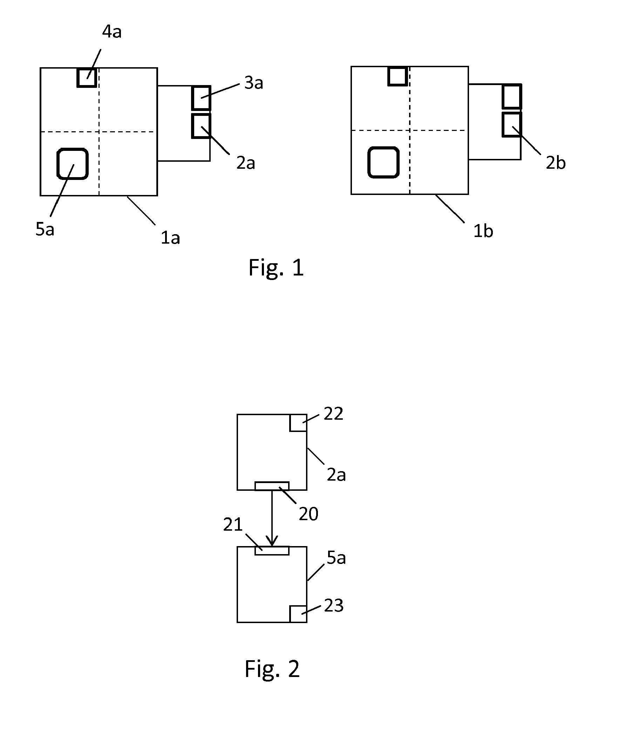

Fig. 1 illustrates an embodiment of the present invention where a number of consumptions meters are arranged in a radio network. In this exemplary embodiment, two houses 1a, 1b are each equipped with three consumption meters 2a-4a, 2b and an in-home display device 5a. The consumption meters may be a heat meter 2a arranged to measure the consumption of district heating, a water meter 3a arranged to measure the consumption of drinking water and an electricity meter 4a arranged to measure the consumption of electricity. Each of the consumptions meters 2a-4a is arranged in a radio network for remote reading of the consumption of the various supplied utilities. The consumption data are via the radio network transmitted to the supplier of the utilities for billing purposes.

In addition to transmitting the consumption data to the supplier, the residents of the household 1a can by virtue of the in-home display 5a monitor the consumption of the different utilities. It is important that the consumption of the various households is kept secret, so that only residents of the household (or other authorized persons) can get access to the household's consumption data. Thus it is not acceptable that the residents of the household 1a can monitor the consumption of any other households 1b, or that unauthorized persons can access a household's consumption data. In connection with embodiments of the present invention, consumption data transmitted from a consumption meter to a display device are therefore encrypted.

Fig. 2 shows an embodiment of the present invention of pairing a transmitting device (consumption meter) to a receiving device (display device), exemplified in the context of installing a display device 5a in a household 1a for monitoring of the household's consumption of the various utilities.

Fig. 2 illustrates further details of the consumption meter 2a and the display 5a. In the illustrated embodiment, the consumption meter is equipped with an optical transmitter 20, and the display device is equipped with an optical receiver 21. The optical range can be the infrared range.

The consumption meter 2a stores a factory installed encryption key, typically unique to the meter. While, the consumption meter stores an encryption key, typically together with other meter specific data, such as a unique identification key. No information identifying the data transmitter, i.e. the meter, is required at the data receiver, i.e. the display, prior to the pairing. Naturally the data receiver needs to be pre-programmed with the pairing routine, communication formats, etc, but not with any unique transmitter identification data.

The encryption key is used to encrypt consumption data that is transmitted by the meter. To this end, the meter comprises a radio unit 22 arranged to transmit the encrypted consumption data, whereas the display comprises a radio unit 23 arranged to received the encrypted data. The radio unit 22 is typically also used for transmitting the consumption data to the supplier, possible via concentrator devices and/or repeater devices.

To make sure that the display only displays data related to the household's meters, the display is paired with each of the meters from which it should display data. In embodiments of the present invention, the two devices are paired via the optical interfaces 20, 21.

In a first step, the pairing is initiated. This initiation may be initiated by pushing a button to activate the optical communication units 20, 21 and to start the data exchange. In the embodiment where optical communication is used, the two devices need to be in line of sight of each other. Normally, the consumption meters are permanently fixed, so the display is placed in front of the optical transmitter during the pairing. An optical connection is a secure connection, since the devices need to be physically placed in line of sight during the pairing, and since the range is very limited.

In the event of one-way communication from the meter to the display, the meter starts transmitting the encryption key. The display may contain a buzzer or other means to indicate that it has received the key successfully. However, other initiation schemes can be envisioned, also schemes which utilizes two-ways communication if the meter and/or display is capable of this. In embodiments, the initiation of the pairing may be user-initiated. User-initiated pairing increases the security of the system, since it requires the presence of the user.

Once received, the display stores the key in a memory. In addition to using the encryption key for decrypting received data, the encryption key is further used as an identifier of the meter with which it is paired.

The secure connection may be implemented by other means than optical line of sight communication. One type of secure connection utilizes a short range communication form to provide the security, since the short range communication form requires the presence of the user in the vicinity of the devices during the pairing. A short range communication channel may be implemented by a number of ways. In one example acoustic signals, such as ultrasonic signal may be used as the communication channel of the pairing. Low-strength RFID tags may be utilized, communication via capacitive sensors, magnetic induction communication, or other near field communication methods. Additionally, also wired communication, where any communication signals during the pairing process is transmitted via a cable connection between the devices.

The short range communication during the pairing introduces a security factor. However, it requires that the devices are physically brought within a short distance from each other. In situations where this is not desired, a mediator device may be used. A mediator device is a hand-held device equipped with a receiver and a transmitter, so that the encryption key may be transmitted from the data transmitted, e.g. using one of the above-mentioned short range communication channels, and stored at the mediator device, after which the key is transmitted to the data receiver device.

In other embodiments, the encryption key may be transmitted in encrypted form. For short range communication this introduces another security factor which is normally not required. However transmission of the encryption key in encrypted form facilitates secure communication using a long range communication channel. By encrypting the encryption key, it may be transmitted in a secure way using the communication channel of the radio network, i.e. using the radio unit 22 to transmit the encryption key. In an embodiment, the secured connection is obtained by encrypting the encryption key by a predefined encryption method known by the data receiver. In this way, the data receiver may be pre-programmed with the relevant decryption method and decryption key to decrypt the encrypted encryption key, and thereby not introducing a requirement of storing the identity of the data transmitter on the data receiver prior to the pairing process.

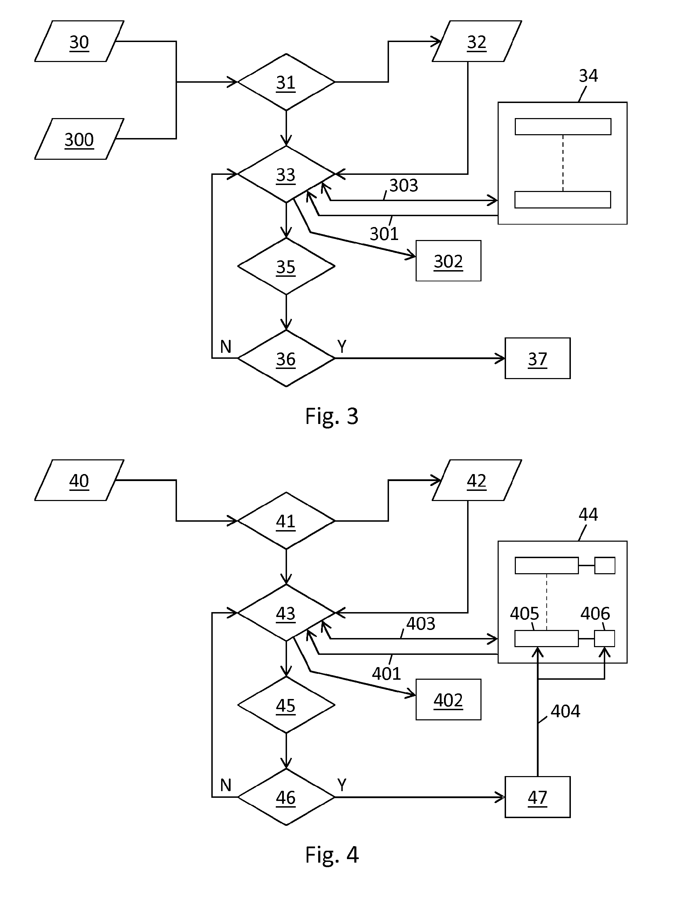

Fig. 3 illustrates a general example flow diagram of communication between the meter and the display in the embodiment of Fig. 1 and 2. The example assumes that the display 5a has been paired with the heat meter 2a and the water meter 3a, but not with any other meters, in particular not with electricity meter 4a and meter 2b. Thus the display stores two encryption keys: key_2a and key_3a. The data receiver, i.e. the display, may be operated to intercept data transmissions which are otherwise transmitted from the consumption meter to the supplier of the utility. In this situation, the consumption meter needs not take into account the eventual presence of a data receiver, it only needs to be able to run a pairing routine. Alternatively may the data transmitter, i.e. the consumption meter, be able to emit dedicated data to the data receiver. In this situation the data receiver need only recognize standard communication protocols, and not protocols specifically used for transmission of consumption data.

Meter 3a transmits 30 encrypted data which is received at the display 31. The received message is in cipher text 32.

The display accesses 303 the stored encryption keys 34 and decrypts 33 the received data with one of them, e.g. key_2a, arriving at a decryption result 35. The decryption result is validated 36, e.g. by application of a check sum routine or other implemented validation routines. In the current case, the wrong key is used and the data does not validate. The decryption routine 33 is rerun, but with a new key 34. In this second try, the key is key_3a and the data validate.

Validated data is further processed 37, e.g. by displaying the consumed amount of utility, the price, etc.

In another example, the display receives data 300 from the neighbour's heat meter 2b. The relevant decryption key: key_2b is not stored in the display since the display 5a and the heat meter 2b are not paired. Running the routine 31 to 36 would not validate the data 300. Thus at some point (i.e. the third time) no key is returned 301 instructing the routine to disregard 302 the data.

In the above example, the entire received data packet is decrypted, however in embodiments only a part of the received data packet may be decrypted and only the decrypted part is used for validation. In this embodiment, the decrypted part comprises an element suitable for validation. If the decrypted part validates, the step of further processing the data 302 comprises a step of decrypting the entire data packet. The advantage of such an embodiment is that that the validation process is quicker and less power consuming since less data needs less processing.

In another embodiment, a particular form of the consumption data may be utilized. For example in the so-called wireless M-Bus as specified in the standard EN13757-4 the identity of the transmitting device is provided in the data packet in non-encrypted form, whereas the remaining part of the data is encrypted. This may be utilized by extending the validation scheme of Fig. 3.

Fig. 4 illustrates a general example flow diagram of communication between the meter and the display in an embodiment utilizing a communication format where the data packet comprises a non-encrypted identifier of the transmitting device. The embodiment of Fig. 4 is similar to the embodiment of Fig. 3, with the exception of, that in connection with the embodiment of Fig. 3 the encryption key is the sole identification of the data transmitter stored at the data receiver. In the embodiment of Fig. 4, this is only the case during the pairing process, whereas during subsequent communication process further identifiers for the data transmitters may be stored at the data receiver.

Thus in connection with the pairing, no information of the identity of data transmitter, except for the encryption key, is provided to the data receiver. Therefore the only identifiers stored initially at the data receiver are a list of the encryption keys received from the data transmitters with which the data receiver has been paired. In the current example, a single key is stored: key_2a*, which have been received by the heat meter 2a utilizing the wireless M-Bus format. However, the key 405 may in the data receiver be associated with an identifier 406 of a data transmitter which utilizing this key. But at the pairing no association is done, only the encryption key is stored.

Meter 2a transmits 40 data for the first time. This data is received at the display 41. The received message 42 comprises an encrypted part and a non-encrypted identifier. The display extracts 43 the identifier and searches its memory for any encryption key which is associated with the identifier. Since it is the first time the meter transmits data to the display, no association is can be found, and the display instead proceeds with a routing as disclosed in connection with Fig. 3. That is the display decrypts 43 the received data with one of the stored keys, here key_2a*, arriving at a decryption result 45. If more keys are stored at the display, this process in continued until either all keys have been tried or the decrypted data validates. In this example, the data validates, since the correct key is stored at the display. Again validated data is further processed 47. However, in this example the further processing includes associating the identifier with the key_2a* 404.

In the current example where only a single key is stored, this method only introduces a redundant step of extracting the non-encrypted identifier and search for any associated keys. However, in a situation where a number of encryption keys are stored at the display, the correct key can be found very fast once the data has been validated the first time, thereby reducing the processing requirements of the display and lowering the power consumption.

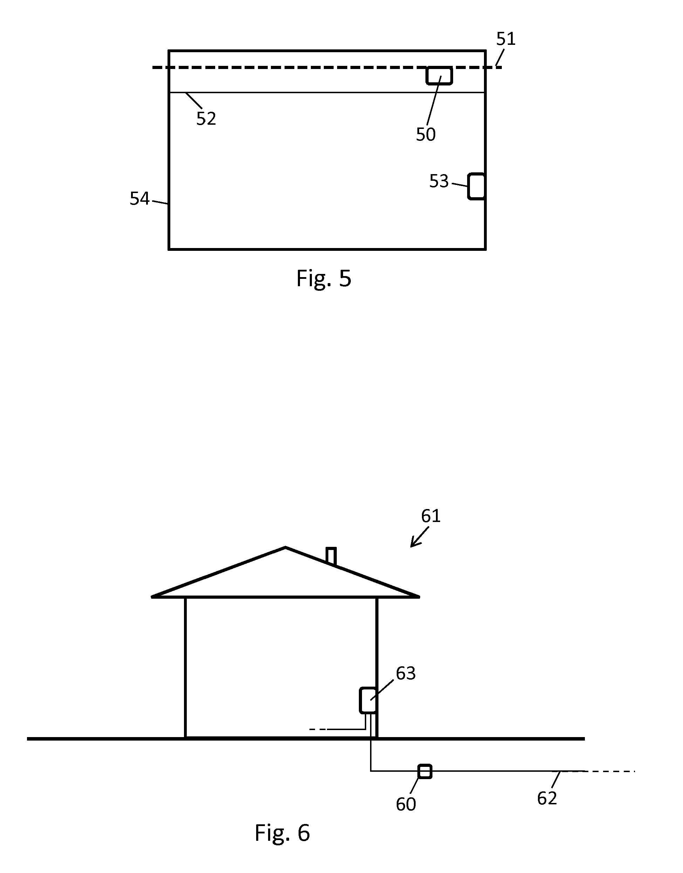

Figs. 1-4 illustrate embodiments where the data receiver is an in-home display. The invention is however not limited to this. Figs. 5 and 6 illustrate embodiments with other types of data receiver devices.

Fig. 5 illustrates a schematic drawing of a situation where a flow meter 50 is attached to a flow system, e.g. a tube system for distributing district heating, district cooling, drinking water or gas into a building 54. In many situations the flow meter is typically installed at an accessible location. However, it may be necessary or preferable to install the flow meter at a location which is not easily accessible. In the current example the flow meter 50 is installed behind a ceiling 52. In other examples the flow meter may be installed in a well, behind a wall, or the flow meter may be encapsulated for protective reason, etc.

Embodiments of the present invention provide an advantageous solution for simple and secure association of a data transmitter 50 to an auxiliary display 53. This type of display may in many respects be similar to the in-home display, except that an in-home display typically processes the received data for visualization and other illustrative purposes. Whereas an auxiliary display normally merely repeat the display of the meter itself.

Fig. 6 illustrates a schematic drawing of where the data receiver is a different device than a display, namely a valve 60.

Fig. 6 illustrates a house 61 with inlaid water provided via a water supply line 62. Attached to the water supply line is a water meter 63 for measuring the amount of water supplied via the water supply line. The house may in an example be a summer cottage or other habitation which is only occasionally used and located remote from the owner's normal habitation. Modern flow meters often comprise various alarms indicating an irregular consumption pattern. For example, a water meter may be equipped with a leak detection system. Leak alarms are normally transmitted to the utility provider, which contacts the owner or by other means shuts off the utility supply until the leak has been located and repaired.
Embodiments of the present invention provides a simple and secure way of providing a valve with the functionality of controlling the availability of the supplied utility after the location of the valve without any modifications of the consumption meter to the specific purpose. The valve should merely be paired with the relevant data transmitter, and if the decrypted data can be validated, the further processing extracts the instructions of the transmitted data. If the valve recognizes the data as a leak alarm (or other relevant alarm), the supply may be shut off.

A similar example applies for an electricity meter, except that power lines are shut off by means of switches rather than valves.

Additionally, the data receiver may be such a device as a mobile or cellular phone, a tablet PC, a communication device for a computing device, such as a PC or laptop, and other electronic equipment with general computing power, network capabilities and a display.

Generally, the data transmitter is a consumption meter. In the above examples, the consumption meter has been in communicative connection with the data transmitter, but not part of a network. In embodiments, consumption meters may be connected in a local network, where one consumption meter acts as a collector node for other consumption meters, and where the collector node is responsible for transmitting all data out of the local network. In such a situation, only the collector node need being paired in accordance with embodiments of the present invention, and only the collector node acts as data transmitter to a data receiver.

In other situations, the data transmitter may be a dedicated communication device, such as a so-called multi utility controller (MUC), which acts as a collector node in a local network of consumption meters. Again, in such situation only the collector node, i.e. the MUC, needs being paired in accordance with embodiments of the present invention, and only the collector node acts as data transmitter to a data receiver.

As it is clear to the skilled person, any aspects disclosed in connection with an in-home display can readily be implemented in other types of embodiments, in particular in the embodiments of an auxiliary or associated display, and in the embodiment of a valve or switch.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope. Moreover, some of the claims comprise steps, some of these steps may in embodiments be reversed, and additional steps may be added between steps.

## Claims

1. A method of pairing a data transmitter and a data receiver arranged in a radio network where at least one device is a consumption meter for measuring consumption data of a supplied utility and wherein the radio network is arranged for transmitting the consumption data, the data transmitter stores an encryption key for encrypting the data transmitted to the data receiver in the radio network, the method comprises:
• initiate pairing of the data transmitter and the data receiver;
• transmit via a secured connection the encryption key from the data transmitter to the data receiver;
• store the encryption key at the data receiver;
• use the encryption key as an identifier of the data transmitter at the data receiver, thereby pairing the data transmitter and the data receiver.

2. The method according to claim 1, wherein the encryption key is the sole identification of the paired data transmitter stored at the data receiver.

3. The method according to any of the preceding claims, wherein prior to the pairing of the data transmitter and the data receiver, no information identifying the data transmitter is stored at the data receiver.

4. The method according to any of the preceding claims, wherein the secured connection is a short range communication different from the communication channel of the radio network.

5. The method according to any of the claims 1-3, wherein the secured connection is obtained by encrypting the encryption key by a predefined encryption method known by the data receiver, where the encrypted encryption key is transmitted via the communication channel of the radio network, and decrypted at the data receiver.

6. The method according to any of the preceding claims, wherein the pairing of the data transmitter and the data receiver is obtained by using a mediator device, wherein the encryption key is transmitted from the data transmitter to the data receiver via the mediator device.

7. The method according to any of the preceding claims, wherein the data transmitter is a consumption meter for measuring consumption data of a supplied utility.

8. The method according to any of the preceding claims, wherein the data receiver is a display device for displaying the consumption data.

9. The method according to any of the claims 1-7, wherein the data receiver is a valve or switch for controlling the availability of the supplied utility after the location of the valve or switch in a supply line.

10. A method of communicating in a radio network between a data transmitter and a data receiver being paired in accordance with any of the claims 1-9, where the data transmitter transmits encrypted data to the data receiver, the data receiver storing encryption keys from devices with which it is paired, the method comprises:
a) at the data transmitter, emit encrypted data;
b) at the data receiver upon receipt of the encrypted data,
o decrypt the received data with a stored encryption key;
o validate the decrypted data;
c) if the decrypted data can be validated, store the received data for further processing, otherwise disregard the received data.

11. The method according to 10, wherein the data receiver stores two or more encryption keys and wherein if the decrypted data does not validate using a first of two or more encryption keys, then step b) to step c) of claim 10 is repeated using a second encryption key until either the decrypted data validates or all the stored encryption keys have been tried.

12. The method according to any of the claims 10-11, wherein the received data is a data packet, and wherein only part of the data packet is decrypted, the decrypted part comprising an element suitable for validation.

13. The method according to any of the claims 10-11, wherein the received data comprises a non-encrypted part comprising an identifier of the data transmitter, and wherein if the received data validates, the identifier is stored at the date receiver and associated with the encryption key.

14. A system of two or more devices arranged in a radio network, where at least one device is a consumption meter for measuring consumption data of a supplied utility, the system comprises a data transmitter and a data receiver arranged in a radio network arranged for transmitting the consumption data; wherein the data transmitter and a data receiver are paired in accordance with any of the claims 1-9, the data transmitter comprising a storage unit storing the encryption key of the data transmitter, and the data receiver comprising a storage unit arranged for storage of the encryption key upon receipt from the data transmitter.
